# EUROPEAN PATENT APPLICATION

(11) **EP 4 647 142 A1**
(43) Date of publication of application: **12.11.2025**
(21) Application number: 23914258.1
(22) Date of filing: 25.07.2023
(51) Int. Cl.: B01D 35/02, A47L 11/40, A47L 11/282, B01D 29/01, B01D 29/27, B01D 29/58

(54) **FILTER DEVICE, BASE STATION, AND CLEANING ROBOT SYSTEM**

(30) Priority: 04.01.2023 CN 202320018139 U
(71) Applicant: Beijing Roborock Technology Co., Ltd., Beijing 102206 (CN)
(72) Inventor: ZHANG, Zhibin, Beijing 102206 (CN); GONG, Hongjian, Beijing 102206 (CN); HE, Yangbo, Beijing 102206 (CN); LIN, Xiang, Beijing 102206 (CN); CHENG, Pan, Beijing 102206 (CN); LIANG, Zhenyu, Beijing 102206 (CN); LI, Zhijun, Beijing 102206 (CN); LIU, Xiaoming, Beijing 102206 (CN)
(74) Representative: Potter Clarkson
(86) International application number: PCT/CN2023/109131
(87) International publication number: WO 2024/146118

(57) **Abstract**

A filter device, a base station, and a cleaning robot system. The filter device (40) is used for the base station (20) of the cleaning robot system. The base station (20) is provided with a cleaning tank (22), in which the filter device (40) is mounted. The filter device (40) comprises: a cover (42) and a filter net bag (43), wherein the cover (42) is arranged above the filter net bag (43), and the cover and the filter net bag (43) enclose an accommodating cavity; the cover (42) is movably connected to the filter net bag (43) by means of a connecting structure (45), so as to make the accommodating cavity open and close; the cover (42) is provided with a plurality of first filter holes (421); the first filter holes (421) are used for filtering some of impurities which are carried by a liquid flowing into the accommodating cavity via the cleaning tank (22); and the accommodating cavity is used for accommodating some of the solid impurities which are carried by the liquid flowing through the accommodating cavity. Thus, the occurrence of the blockage of a dirt discharge pipeline of the base station (20) can be reduced, thereby being conducive for improving the dirt discharge efficiency; in addition, it is convenient to clean the filter device (40), thereby improving the user satisfaction in terms of use.

## Description

The present application claims priority to Chinese Patent Application No. 202320018139.3, filed with the Chinese Patent Office on January 04, 2023 and entitled "FILTERING APPARATUS, BASE STATION AND CLEANING ROBOT SYSTEM", the entire content of which is incorporated herein by reference.

### TECHNICAL FIELD

The present utility model relates to the technical field of smart homes, and in particular to a filtering apparatus, a base station and a cleaning robot system.

### BACKGROUND ART

A current base station is usually equipped with a washing assembly for washing a flat mop pad of a sweeping-mopping all-in-one cleaning robot, and meanwhile, during washing, impurities are collected in a cleaning tank. However, the blocking of a wastewater discharge pipe will occur due to presence of solid impurities in the impurities.

### SUMMARY OF THE UTILITY MODEL

A series of concepts in a simplified form are introduced in the Summary section of the present utility model, and will be further explained in detail in the Detailed Description section. This section of the present utility model does not necessarily mean to try to define key features and necessary technical features of the technical solutions to be claimed, let alone to determine the protection scope of the technical solutions to be claimed.

Embodiments in a first aspect of the present utility model provide a filtering apparatus applicable to a base station of a cleaning robot system. The base station is provided with a cleaning tank for mounting of the filtering apparatus. The filtering apparatus includes a cover body and a filtering mesh bag. The cover body is arranged above the filtering mesh bag and defines an accommodating cavity with the filtering mesh bag, and the cover body and the filtering mesh bag are movably connected through a connecting structure to achieve opening and closing of the accommodating cavity. The cover body is provided with a plurality of first filtering holes, the first filtering holes are used for filtering part of impurities carried by a liquid flowing into the accommodating cavity through the cleaning tank, and the accommodating cavity is used for accommodating part of solid impurities carried by the liquid flowing through the accommodating cavity.

Further, the connecting structure includes at least one of a pivoting mechanism, a snap-fit structure, a magnetic attraction structure and a screw connection structure.

Further, the filtering mesh bag includes: a support frame and a mesh screen, wherein the support frame is connected with the cover body and provided with a water outlet area communicating with the inside and outside of the accommodating cavity, and the mesh screen is connected with the support frame and located at the water outlet area.

Further, the number of the water outlet area is at least one, and the mesh screens and the water outlet areas are in one-to-one correspondence.

Further, the support frame is a plastic member, and the support frame is connected with the mesh screen through secondary molding.

Further, the support frame is also provided with second filtering holes communicating with the inside and outside of the accommodating cavity, and the second filtering holes are located above the mesh screen.

Further, the support frame includes a bottom plate and a side plate which are connected, the side plate is connected with the cover body, the water outlet area is arranged on the bottom plate, and the second filtering holes are located in the side plate and/or the bottom plate.

Further, the filtering apparatus further includes: a float assembly which is arranged on the cover body and includes a float main body floating on a liquid surface under an action of the liquid; one of a non-contact sensing element and a non-contact sensed element is arranged on the float main body and the other thereof is arranged on the base station, and when the filtering apparatus is arranged in the cleaning tank and a liquid level in the cleaning tank falls within a specific range, the non-contact sensing element is capable of sensing the non-contact sensed element.

Further, the non-contact sensed element is arranged on the float main body; and the non-contact sensing element is arranged on the base station.

Further, the non-contact sensed element includes a magnetic member; and the non-contact sensing element includes a magnetic sensing element.

Further, the cover body includes a cover main body and a fence, the cover main body is connected with the filtering mesh bag, the first filtering holes are formed in the cover body, the fence and a portion of an outer edge of the cover main body are connected and cooperatively form a mounting space outside the accommodating cavity, and the float main body is located in the mounting space in a horizontal direction.

Further, the float assembly further includes: a mounting frame detachably arranged on the cover body or formed above the cover body; and a connector, one end of the connector being rotatably connected with the mounting frame, and the other end of the connector being connected with the float main body.

Further, the filtering apparatus is provided with a foolproof limiting member and an indicating member, the foolproof limiting member is suitable for abutting against the base station, and the indicating member is used for indicating whether the filtering apparatus is mounted in place.

Further, the foolproof limiting member includes a buckle structure; and the indicating member includes a planar structure located above the foolproof limiting member.

Further, the filtering apparatus further includes: a connecting part connected with the cover body and located on a side of the cover body away from the filtering mesh bag, wherein the foolproof limiting member is arranged on the connecting part, and the planar structure is arranged at an end of the connecting part away from a filtering mesh.

Further, a protruding structure is arranged on an outer wall of at least one of the cover body and the filtering mesh bag.

Embodiments in a second aspect of the present utility model provide a base station for washing a cleaning robot. The base station includes: a base station main body provided with a cleaning tank; and the filtering apparatus according to any item of the first aspect, the filtering apparatus being detachably mounted in the cleaning tank.

Further, a tank bottom of the cleaning tank is provided with a mounting tank, and a side wall of the mounting tank is provided with a groove structure matching the protruding structure of the filtering apparatus.

Further, a first foolproof positioning member and a second foolproof positioning member which are located above the mounting tank and distributed from top to bottom are arranged in the cleaning tank; when the foolproof limiting member of the filtering apparatus matches the first foolproof positioning member, the planar structure of the filtering apparatus is higher than the tank top of the cleaning tank, indicating that the filtering apparatus is not mounted in place; and when the foolproof limiting member matches the second foolproof positioning member, the planar structure is located below or flush with the tank top, indicating that the filtering apparatus is mounted in place.

Further, the first foolproof positioning member and the second foolproof positioning member are both elastic members, the first foolproof positioning member includes a first abutting part and a first supporting part which are connected, the first abutting part is suitable for abutting against the foolproof limiting member, the first supporting part is connected with the base station main body; and the second foolproof positioning member includes a second abutting part and a second supporting part which are connected, the second abutting part is suitable for abutting against the foolproof limiting member and located below the first abutting part, and the second supporting part is connected with the base station main body.

Embodiments in a third aspect of the present utility model provide a cleaning robot system. The cleaning robot system includes a cleaning robot; and the base station according to any item in the second aspect, the cleaning robot being suitable for docking at the base station.

For the filtering apparatus, the base station and the cleaning robot system according to the embodiments of the present utility model, the base station is provided with the cleaning tank, the filtering apparatus is arranged in the cleaning tank, and the filtering apparatus includes the cover body and the filtering mesh bag. The cover body is arranged above the filtering mesh bag and defines an accommodating cavity with the filtering mesh bag, and the cover body and the filtering mesh bag are movably connected through the connecting structure to achieve the opening and closing of the accommodating cavity. The cover body is provided with the plurality of first filtering holes, the first filtering holes are used for filtering part of impurities carried by the liquid flowing into the accommodating cavity through the cleaning tank, and the accommodating cavity is used for accommodating part of solid impurities carried by the liquid flowing through the accommodating cavity. Therefore, dirty liquid in the cleaning tank flows into the accommodating cavity after larger-sized granular solid impurities are filtered out through the first filtering holes in the cover body, smaller-sized granular solid impurities carried in the dirty liquid in the accommodating cavity will be accommodated in the accommodating cavity after being filtered again through the filtering mesh bag, while the remaining impurities can be discharged to the external environment along with the liquid through the filtering mesh bag. Thus, the cleanliness of the liquid discharged outside the accommodating cavity can be improved, the liquid discharge smoothness and the cleanliness of the discharged liquid of the cleaning tank are improved, and a wastewater discharge pipe is prevented from being blocked, thereby being further beneficial for improving the wastewater discharge efficiency. In addition, since the cover body and the filtering mesh bag are movably connected through the connecting structure, the accommodating cavity can be closed and opened according to filtering requirements or cleaning requirements, which is convenient for a user to clean up the impurities contained in the accommodating cavity and improves the cleaning experience of the user.

The above descriptions are merely an overview of the technical solutions of the present application. In order to understand the technical means of the present application more clearly, it can be implemented according to content of the Description, and in order to make the above and other purposes, features and advantages of the present application more apparent and understandable, the following illustrates specific embodiments of the present application.

### BRIEF DESCRIPTION OF THE DRAWINGS

The following drawings of the present utility model serve as part of the embodiments of the present utility model here for understanding of the present utility model. The embodiments of the present utility model and descriptions thereof are shown in the accompanying drawings for explaining the principles of the present utility model.

In the figures:
FIG. 1 is a schematic structural diagram of a cleaning robot system according to an alternative embodiment of the present utility model;
FIG. 2 is a schematic structural diagram of a cleaning robot according to an alternative embodiment of the present utility model;
FIG. 3 is a schematic structural diagram of the embodiment shown in FIG. 2 from one perspective;
FIG. 4 is a partial schematic exploded view of the embodiment shown in FIG. 3;
FIG. 5 is a schematic structural diagram of a base station according to an alternative embodiment of the present utility model;
FIG. 6 is a schematic structural diagram of the embodiment shown in FIG. 5 from one perspective;
FIG. 7 is a schematic structural diagram of a washing assembly according to an alternative embodiment of the present utility model;
FIG. 8 is a schematic structural diagram of a filtering apparatus according to an alternative embodiment of the present utility model;
FIG. 9 is a schematic structural diagram of the embodiment shown in FIG. 8 from one perspective;
FIG. 10 is a schematic structural diagram of the embodiment shown in FIG. 8 from the other perspective;
FIG. 11 is a schematic structural diagram of the embodiment shown in FIG. 8 from further other perspective;
FIG. 12 is a schematic structural diagram of the embodiment shown in FIG. 8 from yet other perspective;
FIG. 13 is a schematic structural diagram of the embodiment shown in FIG. 8 from yet still other perspective;
FIG. 14 is a schematic structural diagram of the embodiment shown in FIG. 8 from yet still further other perspective;
FIG. 15 is a partial schematic structural diagram of a base station according to an alternative embodiment of the present utility model; and
FIG. 16 is a partial schematic structural diagram of the embodiment shown in FIG. 15.

### Descriptions of reference signs

10 cleaning robot, 110 cleaning robot body, 111 forward part, 112 backward part, 120 perception system, 121 determining apparatus, 122 buffer, 130 control module, 140 driving system, 141 driving wheel module, 142 driven wheel, 150 cleaning system, 151 dry cleaning system, 152 side brush, 153 wet cleaning system, 1531, cleaning head, 1532, driving unit, 1533, driving platform, 1534 supporting platform, 160 energy system, 170 human-computer interaction system, 20 base station, 21 base station main body, 211 wastewater outlet, 22 cleaning tank, 221 tank top, 23 track groove, 241 first foolproof positioning member, 242 second foolproof positioning member, 243 first abutting part, 244 first supporting part, 245 second abutting part, 246 second supporting part, 30 washing assembly, 31 first washing member, 32 support, 33 second washing member, 34 liquid outlet apparatus, 40 filtering apparatus, 41 float assembly, 411 float main body, 412 mounting frame, 413 connector, 42 cover body, 421 first filtering hole, 422 cover main body, 423 fence, 424 indicating member, 425 foolproof limiting member, 426 connecting part, 43 filtering mesh bag, 431 support frame, 432 mesh screen, 433 second filtering hole, 434 bottom plate, 435 side plate, 44 protruding structure, 45 connecting structure, and 50 liquid supply part.

### DETAILED DESCRIPTION

In the following descriptions, a large number of specific details are given for more thorough understanding of the technical solutions according to the present utility model. However, it is apparent for those skilled in the art that the technical solutions according to the present utility model can be implemented without one or more of these details.

It should be noted that the terms used here are only for describing specific embodiments, and not intended to limit the exemplary embodiments according to the present utility model. As used herein, the singular form is also intended to include the plural form unless the context clearly indicates otherwise. Furthermore, it should also be understood that when the terms "include" and/or "comprise" are used in the Description, they specify the presence of features, integers, steps, operations, elements and/or assemblies, but do not exclude the presence or addition of one or more other features, integers, steps, operations, elements, assemblies and/or their combinations.

Now, the exemplary embodiments according to the present utility model will be described in more detail with reference to the accompanying drawings. However, these exemplary embodiments may be implemented in many different forms and should not be construed as limited to the embodiments set forth herein. It should be understood that these embodiments are provided to make the disclosure of the present utility model thorough and complete, and to fully convey the concepts of these exemplary embodiments to those of ordinary skill in the art.

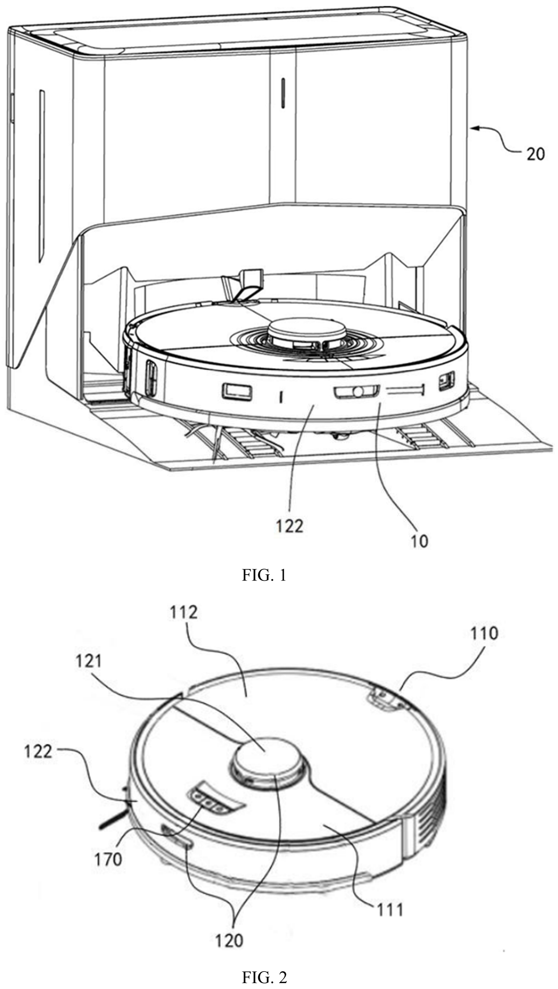

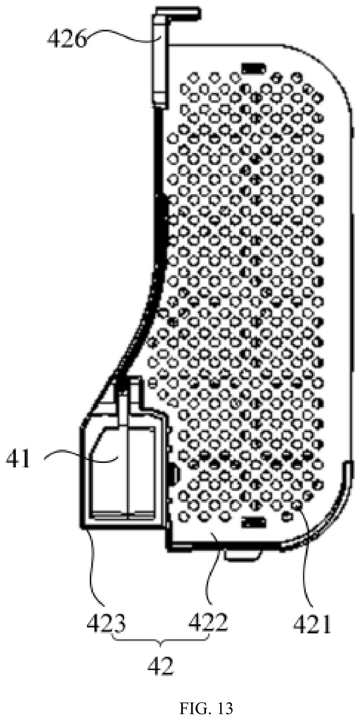

As shown in FIGs. 1 to 16, the embodiments of the present utility model provide a filtering apparatus, a base station and a cleaning robot system. As shown in FIG. 1, the cleaning robot system includes a cleaning robot 10 and a base station 20, that is, the base station 20 operates in conjunction with the cleaning robot 10, and the base station 20 includes a filtering apparatus 40.

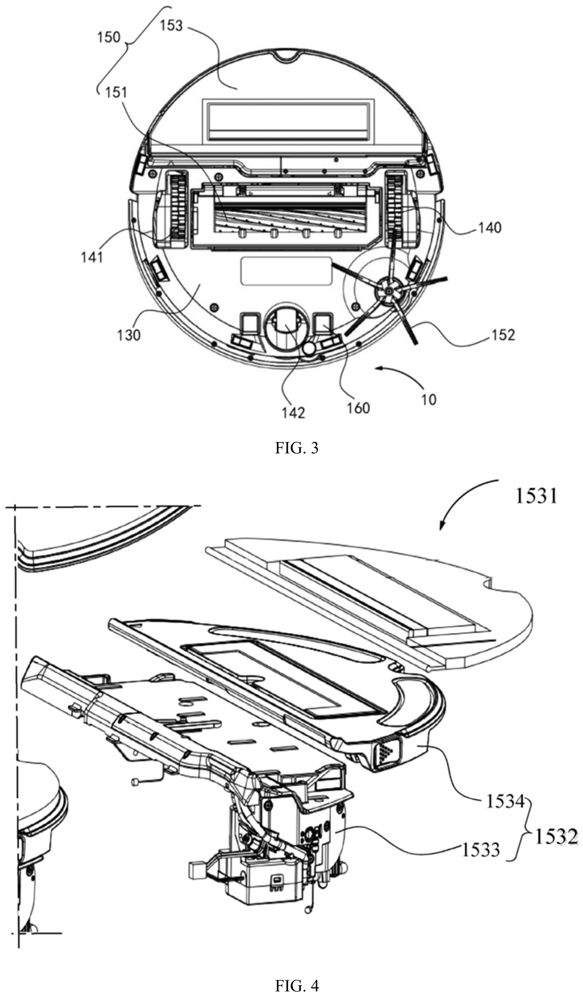

Further, as shown in FIGs. 2 and 3, the cleaning robot 10 may include a cleaning robot body 110, a perception system 120, a control module 130, a driving system 140, a cleaning system 150, an energy system 160 and a human-computer interaction system 170. It can be understood that the cleaning robot 10 may be a self-moving cleaning robot 10 or another cleaning robot 10 that meets the requirements. The self-moving cleaning robot 10 is a device that automatically performs a cleaning operation in a certain area to be cleaned without user operation. When the self-moving cleaning robot 10 starts to work, the automatic cleaning device starts from the base station to perform a cleaning task. When the self-moving cleaning robot 10 completes the cleaning task or needs to stop the cleaning task, the self-moving cleaning robot 10 may return to the base station for charging or other operations.

As shown in FIG. 2, the cleaning robot body 110 includes a forward part 111 and a backward part 112, has an approximately circular shape (both the forward part and the backward part are circular), and may also have other shapes, including but not limited to an approximate D shape with a square forward part and a circular backward part and a rectangular or square shape with a square forward part and a square backward part.

As shown in FIG. 2, the perception system 120 includes a position determining apparatus 121 located on the cleaning robot body 110, a collision sensor and a proximity sensor which are arranged on a buffer 122 of the forward part 111 of the cleaning robot body 110, a cliff sensor arranged at the lower part of the cleaning robot body 110, and a magnetometer, an accelerometer, a gyroscope, an odometer and other sensing apparatuses which are arranged inside the cleaning robot body 110 for providing various position information and motion state information of the cleaning robot to the control module 130. The position determination apparatus 121 includes, but is not limited to, a camera and a laser distance sensor (LDS).

As shown in FIG. 2, the forward part 111 of the cleaning robot body 110 may carry the buffer 122. When a driving wheel module 141 propels the cleaning robot 10 to walk on the ground during cleaning, the buffer 122 detects one or more events in a traveling path of the cleaning robot 10 via a sensor system thereon, such as an infrared sensor, and based on the event, for example obstacles and walls, detected by the buffer 122, the cleaning robot 10 can control the driving wheel module 141, so that the cleaning robot 10 makes a response to the event, for example, get away from the obstacles.

The control module 130 is arranged on a main circuit board in the cleaning robot body 110, and includes a computing processor, such as a central processing unit and an application processor, which communicates with a non-transitory memory, such as a hard disk, a flash memory and a random access memory. The application processor draws an instant map of an environment where the cleaning robot 10 is located by using a positioning algorithm, for example simultaneous localization and mapping (SLAM), according to the obstacle information fed back by the laser distance sensor. Based on distance information and speed information which are fed back by the sensors arranged on the buffer 122, the cliff sensor, the magnetometer, the accelerometer, the gyroscope, the odometer and other sensing apparatuses, a current working state, a current position and a current posture of the cleaning robot 10, such as crossing a threshold, getting on a carpet, being located on a cliff, being stuck from above or below, having a full dust box, being picked up, etc., are comprehensively judged, and specific next action strategies are given for different situations, so that the cleaning robot 10 has a better cleaning capability and thus provides better user experience.

As shown in FIG. 3, the driving system 140 may maneuver the cleaning robot body 110 to travel across the ground based on a driving command with distance and angle information (for example, x, y and θ components). The driving system 140 includes the driving wheel module 141, and the driving wheel module 141 may control a left wheel and a right wheel at the same time. In order to control the movement of the cleaning robot more accurately, it is preferable that the driving wheel module 141 includes both a left driving wheel module 141 and a right driving wheel module 141. The left and right driving wheel modules 141 are arranged along a transverse axis defined by the cleaning robot body 110. In order for the cleaning robot 10 to be able to move more stably on the ground or have a higher motion capability, the cleaning robot 10 may include one or more driven wheels 142, including but not limited to universal wheels. The driving wheel module 141 includes a walking wheel, a driving motor and a control circuit controlling the driving motor. The driving wheel module 141 may also be connected with a circuit measuring a driving current and the odometer. The driving wheel may have a biased drop suspension system and be movably fastened, for example, be rotatably attached to the cleaning robot body 110 and receive a spring bias biased downward and away from the cleaning robot body 110. The spring bias allows the driving wheel to maintain contact and traction with the ground with a certain landing force, and meanwhile, a cleaning element of the cleaning robot 10 also contacts the ground with a certain pressure.

The energy system 160 includes a rechargeable battery, such as a nickel-hydrogen battery and a lithium battery. The rechargeable battery may be connected with a charging control circuit, a battery pack charging temperature detection circuit and a battery undervoltage monitoring circuit, which are then connected with a single chip microcomputer control circuit. A host is connected with a charging pile through a charging electrode arranged at the side or below the cleaning robot body for charging.

The human-computer interaction system 170 includes buttons on a host panel for a user to select functions; it may also include a display screen and/or an indicator light and/or a speaker, and the display screen, the indicator light and the speaker show the current state or function options of the cleaning robot to the user; it may also include a mobile phone client program. For a path navigation type automatic cleaning device, the mobile phone client may show the map of the environment where the device is located and the location of the device to the user, which can provide the user with more abundant and more user-friendly function options.

The cleaning system 150 may be a dry cleaning system 151 and/or a wet cleaning system 153.

As shown in FIG. 3, the dry cleaning system 151 according to the embodiment of the present utility model may include a roller brush, a dust box, a fan and an air outlet. The roller brush with certain interference with the ground sweeps up garbage on the ground and rolls up the garbage to the front of a dust suction port between the roller brush and the dust box, and the garbage is then drawn into the dust box by suction airflow which is generated by the fan and passes through the dust box. The dry cleaning system 151 may further include an edge brush 152 having a rotating shaft, and there is a certain angle between the rotating shaft and the ground for moving debris into a roller brush area of the cleaning system 150.

As shown in FIGs. 3 and 4, the wet cleaning system 153 according to the embodiment of the present utility model may include a cleaning head 1531, a driving unit 1532, a water delivery mechanism, a liquid storage box, etc. The cleaning head 1531 may be arranged below the liquid storage box, and a cleaning liquid in the liquid storage box is delivered to the cleaning head 1531 through the water delivery mechanism, so that the cleaning head 1531 can perform wet cleaning on a plane to be cleaned. In other embodiments of the present utility model, the cleaning liquid in the liquid storage box may also be directly sprayed on the plane to be cleaned, and the cleaning head 1531 cleans the plane by evenly applying the cleaning liquid.

The cleaning head 1531 is used for cleaning a surface to be cleaned, the driving unit 1532 is used for driving the cleaning head 1531 to basically reciprocate along a target surface, and the target surface is part of the surface to be cleaned. The cleaning head 1531 reciprocates along the surface to be cleaned, and the surface of the cleaning head 1531 in contact with the surface to be cleaned is provided with cleaning cloth or a cleaning plate, which generates high-frequency friction with the surface to be cleaned through reciprocating motion, thereby removing stains on the surface to be cleaned.

In the embodiment of the present utility model, as shown in FIG. 4, the driving unit 1532 may further include a driving platform 1533 and a supporting platform 1534, the driving platform 1533 is connected to the bottom surface of the cleaning robot body 110 for providing a driving force, and the supporting platform 1534 is detachably connected to the driving platform 1533 for supporting the cleaning head 1531, and may be lifted under driving of the driving platform 1533.

As an alternative embodiment of the present utility model, the wet cleaning system 153 may be connected with the cleaning robot body 110 through an active lifting module. When the wet cleaning system 153 temporarily does not participate in work, for example, the cleaning robot 10 docks at the base station to wash the cleaning head 1531 of the wet cleaning system 153 and replenish the liquid storage box with water; or when the surface to be cleaned cannot be cleaned by the wet cleaning system 153, the wet cleaning system 153 is raised by the active lifting module.

In the wet cleaning system 153 according to the embodiment of the present utility model, the cleaning head 1531, the driving platform 1533, the supporting platform 1534, the water delivery mechanism and the liquid storage box may be powered by one or more motors. The energy system 160 provides power and energy for the motor, and integral control is provided by the control module 130.

The water delivery mechanism in the embodiment of the present utility model may include a water outlet apparatus, and the water outlet apparatus may be directly or indirectly connected with a liquid outlet of the liquid storage box. The cleaning liquid may flow to the water outlet apparatus through a cleaning liquid outlet of the liquid storage box, and may be evenly applied on the surface to be cleaned through the water outlet apparatus. A connector may be arranged on the water outlet apparatus, and the water outlet apparatus is connected with the cleaning liquid outlet of the liquid storage box through the connector. The water outlet apparatus is provided with a distribution port, the distribution port may be a continuous opening or a combination of a plurality of discrete small openings, and a plurality of nozzles may be arranged at the distribution port. The cleaning liquid flows to the distribution port through the cleaning liquid outlet of the liquid storage box and the connector of the water outlet apparatus, and is evenly applied on the surface to be cleaned through the distribution port.

In the embodiment of the present utility model, the liquid storage box further includes a water replenishing port, and the water replenishing port may be located in the side wall of the water tank. When the cleaning robot 10 docks at the base station 20, the base station 20 may inject water into the liquid storage box of the cleaning robot 10 through the water replenishing port.

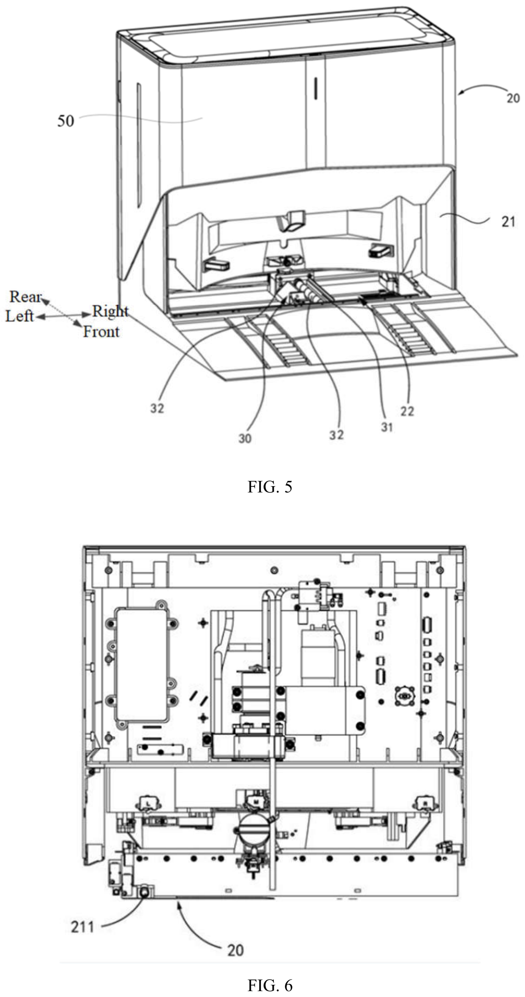

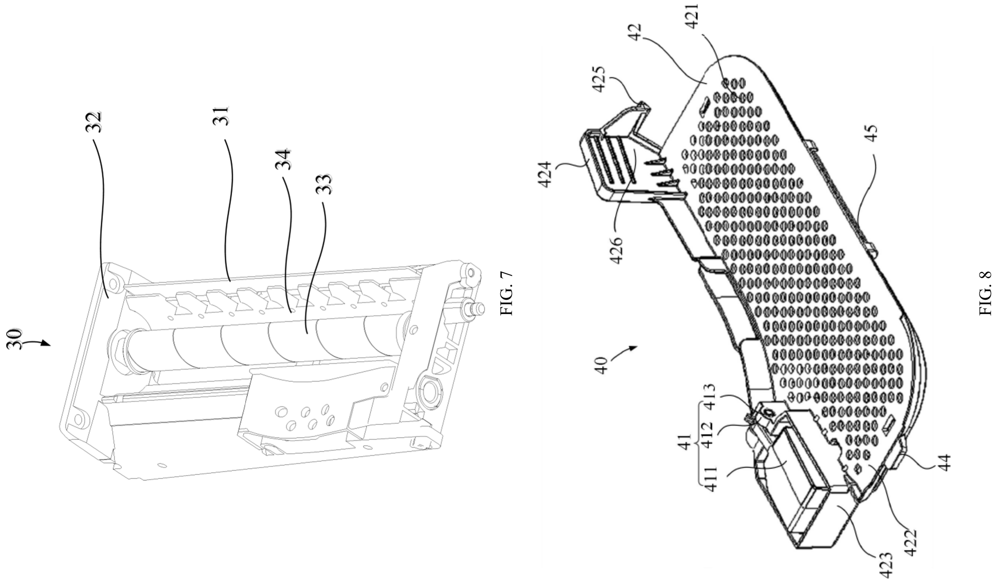

In the embodiment of the present utility model, as shown in FIGs. 5 and 7, the base station 20 includes a base station main body 21 and a washing assembly 30. The washing assembly 30 may be movably arranged on the base station main body 21. Specifically, the washing assembly 30 can move relative to the base station main body 21 in a certain direction, for example, the washing assembly 30 can reciprocate in a left-right direction of the base station 20, and the left-right direction of the base station 20 is as shown by the solid arrow in FIG. 5. The washing assembly 30 includes washing members and the washing members are used for removing impurities on the cleaning system 150 by interfering with the cleaning system 150. That is to say, when the cleaning robot 10 docks at the base station main body 21, the washing assembly 30 faces the cleaning system 150 in position. By interfering with the cleaning system 150, the washing members remove the impurities on the cleaning system 150 in the process that the washing assembly 30 moves relative to the base station main body 21, that is, the cleaning robot 10 can achieve automatic cleaning on the washing assembly 30 of the base station 20, which further omits the operation of manually cleaning the cleaning system 150 or replacement with a new cleaning system 150, simplifies the manual operation, improves the manual cleaning experience and is suitable for popularization and application.

Further, the washing assembly 30 also includes a liquid outlet apparatus 34, and the liquid outlet apparatus 34 of the washing assembly 30 may work while the washing assembly 30 cleans the cleaning system 150 of the cleaning robot 10. The liquid outlet apparatus 34 sprays the cleaning liquid onto the cleaning system 150 to clean the cleaning system 150 with an impact force of the cleaning liquid, or wet the cleaning system 150 with the cleaning liquid, which further improves the cleaning effect in the process of cleaning the cleaning system 150 by the washing members.

Further, the liquid outlet apparatus 34 may spray the cleaning liquid on the washing members 33, and the cleaning liquid is applied to the cleaning system 150 through the washing members, which further ensures a better cleaning effect. Specifically, the washing assembly 30 includes a support 32, and the washing members may include a first washing member 31 and a second washing member 33 which are arranged on the support 32. The first washing member 31 is, for example, a washing scraper blade, and the second washing member 33 is, for example, a washing roller, and the washing roller may auto-rotate. Further, when the liquid outlet apparatus 34 sprays the cleaning liquid on the washing roller, the cleaning liquid can be evenly applied on the cleaning system 150 by autorotation of the washing roller. It can be understood that the liquid outlet apparatus 34 may also spray the cleaning liquid on the cleaning system 150 and the second washing member 33 at the same time to further improve the wetting efficiency of the cleaning system 150.

Further, as shown in FIG. 5, the base station main body 21 is provided with a cleaning tank 22, specifically, the cleaning tank 22 is arranged at the lower part of the base station main body 21, and the washing assembly 30 is located above the cleaning tank 22. In this way, the impurities removed from the cleaning system 150 can be contained in the cleaning tank 22 through the washing members, which is further convenient for subsequent treatment of the impurities and is conducive to improving the cleanliness of the environment nearby the base station 20. It can be understood that the impurities removed from the cleaning system 150 may include wastewater, hair, debris, particulate dust, or other impurities that meet the requirements, which is not specifically limited by the present utility model. It can be understood that since the washing assembly 30 is located above the cleaning tank 212, the cleaning liquid sprayed out by the liquid outlet apparatus 34 will be contained in the cleaning tank 212 after cleaning the cleaning system 150.

In the embodiment according to the present utility model, as shown in FIGs. 8 to 14, the base station 20 is also provided with a filtering apparatus 40, and the filtering apparatus 40 is mounted in the cleaning tank 22. The filtering apparatus 40 includes a cover body 42 and a filtering mesh bag 43. The cover body 42 is arranged above the filtering mesh bag 43 and defines an accommodating cavity with the filtering mesh bag 43, and the cover body 42 and the filtering mesh bag 43 are movably connected through a connecting structure 45 to achieve opening and closing of the accommodating cavity. The cover body 42 is provided with a plurality of first filtering holes 421, the first filtering holes 421 are used for filtering part of impurities carried by a liquid flowing into the accommodating cavity through the cleaning tank, and the accommodating cavity is used for accommodating part of solid impurities carried by the liquid flowing through the accommodating cavity.

Specifically, the dirty liquid in the cleaning tank 22 flows into the accommodating cavity after part of impurities therein is filtered out through the first filtering holes 421 in the cover body 42. For example, the first filtering holes 421 in the cover body can filter larger-sized granular solid impurities and hair in the cleaning tank 22 and retain them on the cover body, while allowing the dirty liquid and smaller-sized granular solid impurities to flow into the accommodating cavity. This improves the cleanliness of the liquid in the accommodating cavity. Since the cover body 42 and the filtering mesh bag 43 define the accommodating cavity, the filtering mesh bag 43 can filter the liquid flowing into the accommodating cavity again. For example, the smaller-sized granular solid impurities carried in the dirty liquid in the accommodating cavity will be accommodated in the accommodating cavity after being filtered again by the filtering mesh bag 43, and the remaining impurities can be discharged to the external environment with the liquid through the filtering mesh bag 43. Therefore, the cleanliness of the liquid discharged outside the accommodating cavity can be improved, the liquid discharge smoothness and the cleanliness of the discharged liquid of the cleaning tank 22 are improved, and a wastewater discharge pipe is prevented from being blocked, thereby being conducive to improving the wastewater discharge efficiency.

The filtering accuracy of the filtering mesh bag 43 may be greater than that of the first filtering holes 421 in the cover body 42. For example, the minimum size of meshes of the filtering mesh bag 43 may be smaller than the minimum opening size of the first filtering holes 421, so that the dirty liquid in the cleaning tank 22 flows into the accommodating cavity after the larger-sized granular solid impurities are filtered out by coarse filtering through the first filtering holes 421 in the cover body 42, while the liquid flowing through the accommodating cavity is discharged from the accommodating cavity after fine filtering through the filtering mesh bag 43 for a wastewater discharge operation.

Specifically, the cover body 42 is provided with the plurality of first filtering holes 421, for example, the cover body 42 may be a filtering screen. The size and shape of the first filtering holes 421 may be reasonably set to limit the filtering accuracy of the first filtering holes 421 of the cover body 42. Specifically, the minimum opening size of the first filtering holes 421 may be 8mm, 10mm, 15mm, or other values that meet the requirements. Similarly, the size and shape of the meshes of the filtering mesh bag 43 may be reasonably set to limit the filtering accuracy of the filtering mesh bag 43. Specifically, the minimum opening size of the meshes of the filtering mesh bag 43 may be 3mm, 4mm, 5mm, or other values that meet the requirements, which is not specifically limited by the present utility model.

That is to say, for the base station 20 according to the present utility model, the filtering apparatus 40 is arranged in the cleaning tank 22, so that the dirty liquid in the cleaning tank 22 is filtered twice by the filtering apparatus 40. Specifically, the first filtering holes 421 in the cover body 42 of the filtering apparatus 40 are used for filtering the larger-sized granular solid impurities in the cleaning tank 22 for the first time, so that the relatively clean liquid flows into the accommodating cavity. Then, the filtering mesh bag 43 is used for filtering the smaller-sized granular solid impurities in the liquid flowing through the accommodating cavity for the second time, so that the smaller-sized granular solid impurities are accommodated in the accommodating cavity. Further, the cleaner liquid flowing to the outside of the accommodating cavity through the filtering mesh bag 43 is subjected to the wastewater discharge operation to achieve the discharge of the dirty liquid in the cleaning tank 22, which can reduce the blockage of the wastewater discharge pipe and is conducive to improving the wastewater discharge efficiency.

In the process of wastewater discharge, the larger-sized granular solid impurities will be filtered to the outside of the accommodating cavity. For example, after the liquid in the cleaning tank 22 is drained, the larger-sized granular solid impurities will be retained on the cover body 42 and the smaller-sized granular solid impurities will be retained in the accommodating cavity. The cover body 42 and the filtering mesh bag 43 are movably connected to open or close the accommodating cavity. Thus, it is convenient to treat the larger-sized granular solid impurities and the smaller-sized granular solid impurities in the accommodating cavity separately. For example, under the condition that the cover body 42 and the filtering mesh bag 43 close the accommodating cavity, the larger-sized granular solid impurities outside the accommodating cavity can be treated, and after the accommodating cavity is opened through the connecting structure 45, the smaller-sized granular solid impurities inside the accommodating cavity are cleaned up. Thus, it is convenient for the user to clean the filtering apparatus 40, which is conducive to improving the cleaning experience of the filtering apparatus 40 and improving the cleaning thoroughness and effectiveness of the filtering apparatus 40.

That is to say, for the filtering apparatus 40 according to the embodiment of the present utility model, the cover body 42 and the filtering mesh bag 43 are movably connected through the connecting structure 45, so that the accommodating cavity can be closed and opened according to filtering requirements or cleaning requirements. Further, the user can clean up the impurities in the accommodating cavity when the accommodating cavity is opened, that is, it is convenient for the user to clean up the impurities contained in the accommodating cavity, and thus the cleaning experience of the user is improved. It can be understood that the larger-sized granular solid impurities residual on the cover body 42 can be directly cleaned up since they are located outside the accommodating cavity.

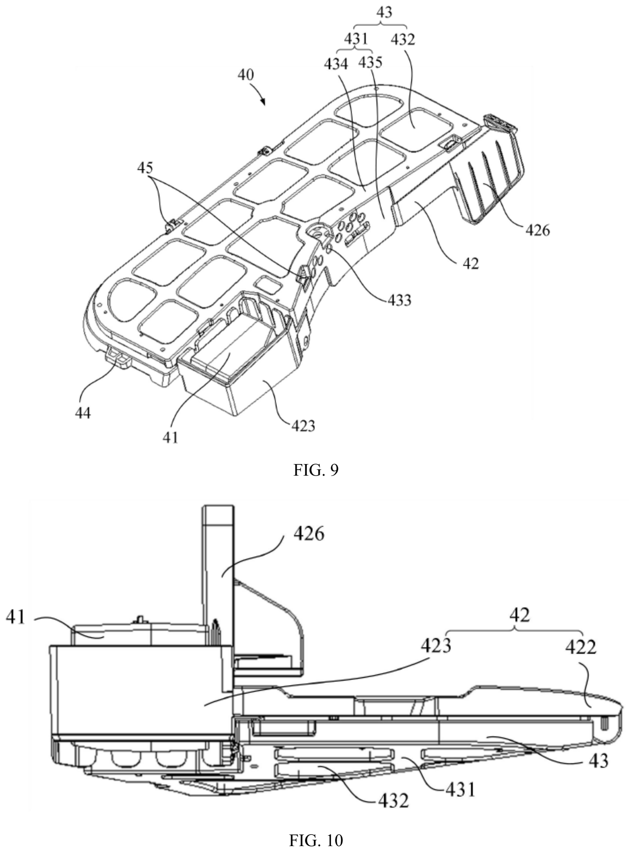

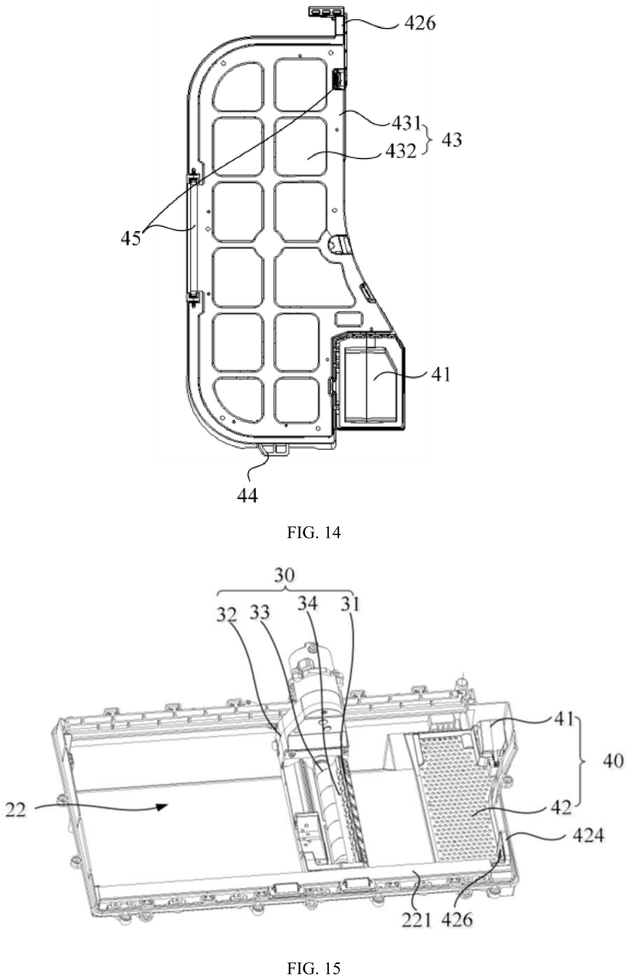

In some possible embodiments according to the present utility model, as shown in FIGs. 9 and 14, the connecting structure 45 includes at least one of a pivoting mechanism, a snap-fit structure, a magnetic attraction structure and a screw connection structure.

The pivoting mechanism may be a pivoting shaft, the snap-fit structure may be a slot-and-tab structure, the magnetic attraction structure may be a magnetic member and a magnetic attraction member, and the screw connection structure may be a screw and threaded hole assembly. Thus, the cover body 42 and the filtering mesh bag 43 can be movably connected through one or more of the above connecting structures 45, and further the accommodating cavity can be opened or closed.

Specifically, the cover body 42 and the filtering mesh bag 43 may be of a split structure, for example, the mounting and dismounting of the cover body 42 and the filtering mesh bag 43 can be realized by one of the snap-fit structure, the magnetic attraction structure and the screw connection structure, so that the cover body 42 and the filtering mesh bag 43 can be dismounted and separated for the cleaning operation, so as to further improve the cleaning thoroughness of the filtering apparatus 40. In addition, with such an arrangement, the cover body 42 or the filtering mesh bag 43 can be replaced or repaired independently in the case of a fault, which is conducive to reducing the member replacement cost and improving the maintenance efficiency.

It can be understood that the cover body 42 and the filtering mesh bag 43 may also be rotatably connected through the pivoting shaft, so that the cover body 42 rotates relative to the filtering mesh bag 43 to open or close the accommodating cavity. This enables an easy operation.

Specifically, as shown in FIGs. 9 and 14, the cover body 42 and the filtering mesh bag 43 are rotatably connected through the pivoting mechanism, and meanwhile, the cover body 42 and the filtering mesh bag 43 are connected through the snap-fit structure. With such an arrangement, when the cover body 42 and the filtering mesh bag 43 open the accommodating cavity, the cover body 42 and the filtering mesh bag 43 will not be separated, and the situation that the cover body 42 and the filtering mesh bag 43 are separated and lost is avoided. Meanwhile, due to the arrangement of the snap-fit structure, the cover body 42 and the filtering mesh bag 43 can be reliably connected to improve the closing reliability of the accommodating cavity, and the operation is convenient, thereby improving user satisfaction during use.

Further, the filtering apparatus 40 is detachably arranged in the cleaning tank 22, so that the filtering apparatus 40 can be detached from the cleaning tank 22 for cleaning, maintenance or replacement, and the operation is simple and convenient.

In some embodiments, as shown in FIG. 15, the filtering apparatus 40 may be arranged at an inner bottom of the cleaning tank 22 of the base station 20, which is conducive to improving the filtering thoroughness of the liquid in the cleaning tank 22 by the filtering apparatus 40. In addition, since the cover body 42 at the upper layer of the filtering apparatus 40 is provided with the filtering holes, and the filtering mesh bag 43 at the lower layer of the filtering apparatus 40 is provided with the meshes, the upper and lower layers can not only allow the liquid to pass through the filtering apparatus 40 smoothly, but also facilitate air circulation, which avoids the problem of odor formation because the water accumulated between the filtering apparatus and the bottom of the cleaning tank is not discharged punctually and stored there for a long time.

The filtering apparatus 40 may be located on at least one side of the cleaning tank 22, that is, the filtering apparatus 40 may only be arranged at the bottom of one side of the cleaning tank 22, or the filtering apparatuses 40 are arranged at the bottoms of two sides of the cleaning tank 22. The different arrangement positions of the filtering apparatus 40 can meet the requirements of different structures of the filtering apparatus 40 and different filtering efficiency of the cleaning tank 22, which expands the application range of the product.

Further, the inner bottom of the cleaning tank 22 is arranged obliquely downward from the side away from the filtering apparatus 40 to the side close to the filtering apparatus 40. This plays a better guiding role and allows the liquid in the cleaning tank 22 to flow through the filtering apparatus 40 quickly and thoroughly, which is conducive to improving the filtering efficiency and filtering effect.

In the above embodiment, the cover body 42 is located above the filtering mesh bag 43, that is, the filtering mesh bag 43 is located below the cover body 42, so that the liquid flowing through the accommodating cavity is filtered again by the filtering mesh bag 43, and then discharged to the outside of the accommodating cavity through the filtering mesh bag 43, that is, the liquid in the accommodating cavity is discharged through the filtering mesh bag 43, so as to achieve the wastewater discharge operation of the cleaning tank 22.

Further, the cleaning tank 22 is provided with a wastewater outlet 211, and the wastewater outlet 211 communicates the filtering mesh bag 43 with the external environment. For example, the wastewater outlet 211 is located nearby the filtering mesh bag 43 and communicates the external environment, so that the liquid discharged through the filtering mesh bag 43 can be discharged to the external environment through the wastewater outlet. Further, as shown in FIG. 6, the dirty liquid in the cleaning tank 22 flows into the accommodating cavity through the filtering screen 42, and is discharged from the filtering mesh bag 43 to the external environment through the wastewater outlet 211.

Further, the base station 20 may also include a wastewater discharge mechanism, and the wastewater discharge mechanism communicates with the wastewater outlet 211, so as to transport the dirty liquid in the accommodating cavity to the outside of the cleaning tank 22 through a water outlet and the wastewater outlet 211 by a suction action and a pumping action of the wastewater discharge mechanism, and further improve the wastewater discharge effect of the base station 20. Specifically, the wastewater discharge mechanism may include a fan assembly or a pump body assembly, or a wastewater discharge assembly that meets the requirements, which is not specifically limited by the present utility model.

Further, the base station 20 may also include a collection box, and the collection box communicates with the wastewater outlet 211 through the wastewater discharge mechanism. Therefore, the dirty liquid in the cleaning tank 22 is transported to the collection box through the accommodating cavity, the filtering mesh bag 43, the wastewater outlet 211 and the wastewater discharge mechanism, so as to prevent the impurities in the cleaning tank 22 from overflowing and affecting the cleaning effect of the washing member and causing a dirty working environment. The arrangement of the collection box is conducive to ensuring a better cleaning effect and centralized treatment of the collected impurities.

In some possible embodiments according to the present utility model, as shown in FIGs. 9, 10, 12 and 14, the filtering mesh bag 43 includes a support frame 431 and a mesh screen 432. The support frame 431 is connected with the cover body 42 and is provided with a water outlet area communicating with the inside and outside of the accommodating cavity, and the mesh screen 432 is connected with the support frame 431 and located in the water outlet area.

Due to the arrangement of the support frame 431, the support frame 431 is connected with the cover body 42 to have a certain space, which further defines the accommodating cavity. Due to the arrangement of the water outlet area, the liquid in the accommodating cavity can be discharged to the outside of the accommodating cavity through the water outlet area. The mesh screen 432 is arranged in the water outlet area and thus is capable of filtering the liquid discharged from the accommodating cavity to the outside of the accommodating cavity through the water outlet area. This achieves a secondary filtering operation of the filtering apparatus 40, thereby improving the cleanliness of the liquid discharged outside the accommodating cavity through the filtering apparatus 40 and avoid the blockage of the wastewater discharge pipe.

It can be understood that the wastewater outlet 211 may communicate with the water outlet area, so that the liquid in the accommodating cavity is filtered by the mesh screen 432 in the process of flowing to the wastewater outlet through the water outlet area.

In the above embodiment, as shown in FIGs. 9 and 14, the number of the water outlet area is at least one, and the mesh screens 432 and the water outlet areas are in one-to-one correspondence, that is, the number of the water outlet areas may be one, two, three or other numbers. Thus, the requirements of different water outlet efficiency of the filtering apparatus 40 can be met. The mesh screens 432 and the water outlet areas are in one-to-one correspondence, so that the mesh screen 432 is arranged at each water outlet area to realize the filtering operation, which further ensures the cleanliness of the liquid discharged outside the accommodating cavity through the filtering apparatus 40.

Specifically, the water outlet area may be located at the bottom of the support frame 431. Such an arrangement reduces the problem that some liquid is residual in the accommodating cavity and cannot be discharged, which is beneficial for improving the drainage efficiency and thoroughness of the filtering apparatus 40. The shapes of the plurality of water outlet areas may be the same or different, and the mesh sizes of the mesh screens 432 corresponding to different water outlet areas may be the same or different.

The mesh screen 432 may be made of a metal or nonmetal material, and for example, the mesh screen 432 may be made of stainless steel wires, and may also be a nylon mesh screen 432, a glass fiber mesh screen 432, etc. Specifically, the material of the mesh screen 432, the thickness of the mesh screen 432, the mesh size and the like may be reasonably selected according to specific requirements.

In some possible embodiments according to the present utility model, the support frame 431 is a plastic member, and the support frame 431 is connected with the mesh screen 432 through secondary molding. That is, the filtering mesh bag 43 is manufactured by a secondary molding process. Such an arrangement simplifies the arrangement of a connecting part 426 of the support frame 431 and the mesh screen 432, which can meet the design requirements of the filtering mesh bag 43 for a compact structure. In addition, it is beneficial for improving the reliability and firmness of the connection between the support frame and the mesh screen 432, preventing the mesh screen 432 from being detached from the support frame, prolonging the service life of the filtering mesh bag 43 and improving the reliability of the filtering apparatus 40.

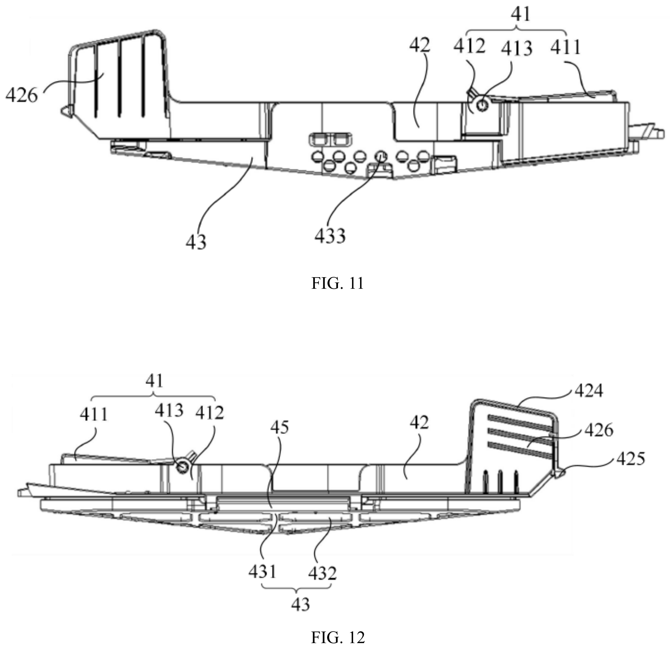

In some possible embodiments according to the present utility model, as shown in FIGs. 9 and 11, the support frame 431 is also provided with second filtering holes 433 communicating with the inside and outside of the accommodating cavity, and the second filtering holes 433 are located above the mesh screen 432.

In the present embodiment, the arrangement of the second filtering holes 433 can increase a water flow rate of the filtering apparatus 40, and further improve the filtering efficiency of the filtering apparatus 40. For example, when the accommodating cavity is closed, the liquid outside the accommodating cavity may flow into the accommodating cavity through the first filtering holes 421 in the cover body 42 and the second filtering holes 433 in the support frame 431. The second filtering holes 433 are located above the mesh screen 432, so that the liquid in the accommodating cavity can flow to the outside of the accommodating cavity after being filtered by the mesh screen 432, thereby improving the filtering efficiency of the filtering apparatus 40.

In addition, when the smaller-sized granular solid impurities on the mesh screen 432 block the mesh screen 432, the first filtering holes 421 in the cover body 42 and the second filtering holes 433 in the support frame 431 can form a liquid circulation path. Since the second filtering holes 433 are located above the mesh screen 432 and below the first filtering holes 421, the mesh screen 432 can be flushed to prevent the mesh screen 432 from being blocked by the impurities and ensure that the filtering mesh bag 43 has a better filtering effect.

Specifically, the number of the second filtering holes 433 may be one, two or other numbers to meet the requirements of different water flow rates of the filtering mesh bag 43. The filtering accuracy of the second filtering holes 433 may be less than that of the mesh screen 432 to facilitate machining of the second filtering holes 433. The filtering accuracy of the second filtering holes 433 may be greater than, equal to or less than that of the first filtering holes 421.

In the above embodiment, as shown in FIG. 9, the support frame 431 includes a bottom plate 434 and a side plate 435 which are connected, the side plate 435 is connected with the cover body 42, that is, the bottom plate 434, the side plate 435 and the cover body 42 define the accommodating cavity, the bottom plate 434 is arranged opposite to the cover body 42, and the bottom plate 434 is located at the bottom of the filtering apparatus 40. The water outlet area is arranged on the bottom plate 434, which allows the liquid in the accommodating cavity to flow to the outside of the accommodating cavity through the water outlet area located at the bottom of the filtering apparatus 40 for the wastewater discharge operation.

The second filtering holes 433 may be located in the side plate 435, or the second filtering holes 433 may be located in the bottom plate 434, or the second filtering holes 433 may be located in both the side plate 435 and the bottom plate 434, so as to meet the requirements of different water flow rates of the filtering mesh bag 43. Specifically, when the second filtering holes 433 are located in the side plate 435, it can be understood that the second filtering holes 433 are located in the side surface of the accommodating cavity, and when the second filtering holes 433 are located in the bottom plate 434, it can be understood that the second filtering holes 433 are located at the bottom of the accommodating cavity.

Specifically, when the second filtering holes 433 are located in the bottom plate 434, the bottom plate 434 is provided with a boss structure, and the second filtering holes 433 are formed in the boss structure, so that the second filtering holes 433 are located above the mesh screen 432.

In some possible embodiments according to the present utility model, as shown in FIGs. 8 to 14, the filtering apparatus 40 further includes a float assembly 41, which is arranged on the cover body 42. The float assembly 41 includes a float main body 411 floating on the liquid surface under the action of the liquid. One of a non-contact sensing element and a non-contact sensed element is arranged on the float main body 411 and the other thereof is arranged on the base station 20. When the filtering apparatus 40 is arranged in the cleaning tank 22, and a liquid level in the cleaning tank 22 falls within a specific range, the non-contact sensing element may sense the non-contact sensed element.

The non-contact sensing element is used for detecting the non-contact sensed element. For example, the non-contact sensing element is used for detecting signal parameters emitted by the non-contact sensed element. One of the non-contact sensing element and the non-contact sensed element is arranged on the float main body 411 and the other thereof is arranged on the base station 20, for example, on the base station main body 21. That is, one of the non-contact sensing element and the non-contact sensed element moves with floating of the float main body 411, and the other thereof is arranged at a fixed position of the base station main body 21. For example, the other is arranged at the position where the filtering apparatus 40 is to be mounted on the base station main body 21. In this way, the signal parameters emitted by the non-contact sensed element and detected by the non-contact sensing element are different when the float main body 411 floats up and down under the action of the liquid. Further, a liquid level range in the cleaning tank 22 can be determined according to different signal parameters, and whether the filtering apparatus 40 is located in the cleaning tank is determined.

In the embodiment of the present utility model, the float assembly 41 may be arranged outside the accommodating cavity, which can prevent the accommodating cavity from interfering with a floating range of the float assembly 41 and further is beneficial for improving the detection accuracy of the float assembly 41.

Further, when the filtering apparatus 40 is arranged in the cleaning tank 22 of the base station 20, and the liquid level in the cleaning tank 22 falls within the specific range, the non-contact sensing element may sense the non-contact sensed element, indicating that the filtering apparatus 40 is accurately mounted on the base station main body 21, and the water level in the cleaning tank 22 is in the specific range, for example, the water level in the cleaning tank 22 is at a safe position and will not affect normal working of the base station. That is, the detection apparatus consisting of the float assembly 41, the non-contact sensing element and the non-contact sensed element can simultaneously detect the liquid level in the cleaning tank 22 and the current position of the filtering apparatus 40, which expands functions of the float assembly 41 and simplifies the arrangement of the detection apparatus, that is, simplifies the product structure, and system software programs and algorithms. Thus, the cost can be effectively reduced and it is suitable for popularization and application.

That is to say, for the base station 20 according to the present embodiment of the present utility model, whether the filtering apparatus 40 is mounted in the cleaning tank 22 and whether the water level in the cleaning tank 22 is in a normal range can be simultaneously detected by the arrangement of the float assembly 41 on the filtering apparatus 40 and cooperation of the non-contact sensing element and the non-contact sensed element, which simplifies the structure of the base station 20.

Further, the float assembly 41 is arranged on one side of the filtering apparatus 40, so that better detection between the non-contact sensing element and the non-contact sensed element can be realized, which is beneficial for improving the detection accuracy.

Specifically, on the one hand, the non-contact sensed element is arranged on the float main body 411 and the non-contact sensing element is arranged on the base station main body 21; and on the other hand, the non-contact sensing element is arranged on the float main body 411 and the non-contact sensed element is arranged on the base station main body 21. The different arrangement positions of the non-contact sensed element and the non-contact sensing element can meet the requirements of the non-contact sensed element and the non-contact sensing element for different structures and different performance, which expands the application range of the product.

It can be understood that the non-contact sensed element may include a magnetic member, a light emitting member or other components that meet the requirements, and the non-contact sensing element may include a magnetic sensing member, an optical sensing member or other components that meet the requirements. The non-contact sensed element or non-contact sensing element arranged on the float main body 411 may be located inside or outside the float main body 411, or at other positions that meet the requirements, which is not specifically limited by the present utility model.

Further, a high water level value of the cleaning tank 22 of the base station 20 is a first preset threshold, and the specific range is less than or equal to the first preset threshold. That is to say, when the liquid level in the cleaning tank 22 is lower than or equal to the high water level value of the cleaning tank 22 and the filtering apparatus 40 is mounted in the cleaning tank 22, the non-contact sensing element may sense the non-contact sensed element, indicating that the filtering apparatus 40 is mounted in the cleaning tank 22 of the base station main body 21, the water level in the cleaning tank 22 is lower than or equal to the high water level value, and the liquid in the cleaning tank 22 will not affect normal working of the base station 20. For example, there is no risk that the dirty liquid in the cleaning tank 22 overflows, and the dirty liquid in the cleaning tank 22 will not pollute the washing assembly 30, etc. In this case, the cleaning tank 22 may continue to accommodate the impurities and dirty liquid.

Conversely, when the filtering apparatus 40 is not mounted in the cleaning tank 22 of the base station main body 21, or when the filtering apparatus 40 is mounted in the cleaning tank 22 of the base station main body 21, and the water level in the cleaning tank 22 is higher than the specific range, the non-contact sensing element cannot sense the non-contact sensed element, indicating that the filtering apparatus 40 is not mounted in place or the water level in the cleaning tank 22 is higher, and there is a risk of affecting the normal working of the base station 20. In this case, the user may be reminded of mounting the filtering apparatus 40 on the base station main body 21 or stopping introduction of the sundries or dirty liquid into the cleaning tank 22.

In the embodiment of the present utility model, the high water level value of the cleaning tank 22 may be a fixed value, that is, the first preset threshold may be a fixed value, for example, the high water level value of the cleaning tank 22 is 10mm, 20mm, 30mm, 50mm or other values that meet the requirements. Alternatively, the high water level value of the cleaning tank 22 is related to a tank height of the cleaning tank 22, for example, the high water level value of the cleaning tank 22 is 0.95 times, 0.90 times, 0.85 times the tank height of the cleaning tank 22 or other values that meet the requirements.

It can be understood that the base station 20 also includes a controller, and the washing assembly 30 also includes a liquid outlet apparatus 34 electrically connected with the controller. In the process of washing the cleaning system 150 of the cleaning robot 10 by the washing member of the washing assembly 30, the liquid outlet apparatus 34 of the washing assembly 30 may work at the same time, and the liquid outlet apparatus 34 sprays the cleaning liquid onto the cleaning system 150 to wash the cleaning system 150 with the impact force of the cleaning liquid, or to wet the cleaning system 150 with the cleaning liquid, which further improves the cleaning effect in the process of cleaning the cleaning system 150 by the washing member. Since the washing assembly 30 is located above the cleaning tank 22, the cleaning liquid will be contained in the cleaning tank 22 after washing the cleaning system 150.

The controller is electrically connected to the base station 20 through the non-contact sensing element to output a sensing result to the controller. It can be understood that the controller of the base station 20 may also interact with the cleaning robot 10 or a remote control terminal (APP) for information exchange. In this way, it is convenient for the controller to reasonably control the work of other components of the cleaning system 150 according to the sensing result of the non-contact sensing element, for example, control a working state of the liquid outlet apparatus 34 according to the sensing result; control the liquid outlet apparatus 34 to continue working when the non-contact sensing element can sense the non-contact sensed element; and control the liquid outlet apparatus 34 to stop working when the non-contact sensing element does not sense the non-contact sensed element to prevent the liquid in the cleaning tank 22 from affecting the normal working of the base station 20. In addition, when the non-contact sensing element does not sense the non-contact sensed element, the controller may also send a reminder signal to remind the user of checking whether the filtering apparatus 40 is mounted in place. Such an arrangement greatly improves the working reliability and safety of the base station 20, and is suitable for popularization and application.

Further, as shown in FIG. 5, the base station 20 also includes a liquid supply part 50 and a liquid delivery channel, one end of the liquid delivery channel communicates with the liquid supply part 50, and the other end of the liquid delivery channel communicates with the liquid outlet apparatus 34, so that the liquid supply part 50 can deliver the cleaning liquid into the liquid outlet apparatus 34 through the liquid delivery channel.

In some possible embodiments according to the present utility model, the non-contact sensed element is arranged on the float main body 411 and the non-contact sensing element is arranged on the base station main body 21.

Further, the non-contact sensed element includes a magnetic member, and the non-contact sensing element includes a magnetic sensing element. The magnetic member is arranged on the float main body 411, and the magnetic sensing element is arranged on the base station main body 21. Specifically, the magnetic member may be arranged inside the float main body 411. Such an arrangement can avoid the problems of faults and interference with signal emission intensity caused by the fact that the magnetic member is wetted and thus corroded by the liquid since the magnetic member is arranged outside the float main body 411, which is further beneficial for prolonging the service life of the magnetic member and the stability and reliability of the signal emission.

That is to say, the filtering apparatus 40 according to the present utility model is provided with the float assembly 41, the filtering apparatus 40 is arranged in the cleaning tank 22 of the base station 20, the magnetic member is arranged in the float main body 411, and the magnetic sensing element is arranged on the base station main body 21. Under the action of the liquid, when the magnetic member floats to a detection range of the magnetic sensing element, that is, when the magnetic sensing element can detect a signal of the magnetic member, it is indicated that the filtering apparatus 40 is mounted in the cleaning tank 22, and the liquid level in the cleaning tank 22 is within the specific range, for example, the liquid level is below the high water level value of the cleaning tank 22. In this case, the control apparatus may control the liquid outlet apparatus 34 to continue working and control the washing assembly 30 to continue working to wash the cleaning system 150 of the cleaning robot 10. When the magnetic member floats beyond the detection range of the magnetic sensing element, that is, the magnetic sensing element cannot detect the signal of the magnetic member, it is indicated that the liquid level in the cleaning tank 22 possibly reaches or exceeds the high water level value of the cleaning tank 22, and there is a risk that the liquid in the cleaning tank 22 will affect the normal working of the base station 20, or the filtering apparatus 40 is possibly not mounted correctly in the cleaning tank 22. In this case, the control apparatus may control the base station 20 to stop working, for example, control the liquid outlet apparatus 34 to stop working, so as to prevent the liquid level in the cleaning tank 22 from continuously rising and causing overflow. In addition, the control apparatus may also send a reminder signal to remind the user of checking whether the filtering apparatus 40 is mounted in place. Such an arrangement achieves a simple structure, easiness in implementation and a lower cost, thereby being suitable for popularization and application.

Specifically, the magnetic member may be a magnetic stripe, a magnetic ring or other magnetic structures that meet the requirements, and the magnetic sensing element may be a magnetic sensing sensor or other structures that meet the requirements. Specifically, the magnetic sensing element may be an annular structure or a sheet structure or other structures that meet the requirements.

Further, the number of the magnetic sensing elements may be one, two or more, and the two or more magnetic sensing elements are arranged at different positions of the base station main body 21, and can sense that the liquid levels at different heights in the cleaning tank 22 reach different specific ranges, that is, can detect the liquid levels at different heights in the cleaning tank 22, so that the application range of the product is expanded.

In some possible embodiments according to the present utility model, as shown in FIGs. 8, 10 and 13, the cover body 42 includes a cover main body 422 and a fence 423, the cover main body 422 is connected with the filtering mesh bag 43, the first filtering holes 421 are formed in the cover body 42, the fence 423 and a portion of an outer edge of the cover main body 422 are connected and cooperatively form a mounting space outside the accommodating cavity, that is, the fence 423 is distributed on the edge position of the cover main body 422, and the float main body 411 is located in the mounting space in the horizontal direction.

In the present embodiment, the float main body 411 is located outside the accommodating cavity, so that the accommodating cavity will not interfere with a movement range of the float main body, which is beneficial for improving the accuracy of the float assembly 41 in detecting the liquid level in the cleaning tank 22. In addition, the float main body 411 can be maintained or inspected outside the accommodating cavity, which is convenient for user operation. The first filtering holes 421 are formed in the cover main body 422, indicating that the first filtering holes 421 are located outside the mounting space. Moreover, in the process of wastewater discharge, the larger-sized granular impurities are possibly retained on the cover main body 422 through the first filtering holes 421. The arrangement of the fence 423 plays a certain role in protecting the float main body 411, which can prevent the larger-sized granular garbage on the cover main body 422 from affecting the floating accuracy of the float main body 411 and can further improve the detection accuracy of the float assembly 41.

In some possible embodiments according to the present utility model, as shown in FIGs. 8, 10, 11 and 12, the float assembly 41 includes a mounting frame 412 and a connector 413. The mounting frame 412 is arranged on the cover body 42, and the connector 413 connects the mounting frame 412 and one end of the float main body 411, so that the float main body 411 can rotate relative to the mounting frame 412. That is, the float main body 411 floats on the liquid surface under the action of the liquid, and can swing vertically approximately relative to the mounting frame 412, that is, the float main body 411 can swing close to or away from the cover body 42 relative to the mounting frame 412. Further the non-contact sensed element arranged in the float assembly 41 is driven to swing vertically relative to the cover body 42 and to cooperate with the non-contact sensing element arranged on the base station main body 21 to achieve the detection on the liquid level in the cleaning tank 22 and whether the filtering apparatus 40 is mounted in the cleaning tank 22.

Specifically, the mounting frame 412 is provided with a through hole, one end of the float main body 411 is provided with a mounting hole, the connector 413 penetrates the mounting hole and the through hole to rotatably connect one end of the float main body 411 with the mounting frame 412. The connector 413 may be a rotating shaft, a hinge pin, or other connectors 413 meeting the requirements, and an axis of rotation of the float main body 411 relative to the mounting frame 412 is parallel to a plane where the bottom wall of the cleaning tank 22 is located. For example, the axis of the rotating shaft is parallel to the plane where the bottom wall of the cleaning tank 22 is located, so that the float assembly 41 can only swing approximately in the vertical direction relative to the mounting frame 412, to achieve accurate measurement on the liquid level height.

Further, in the present embodiment of the present utility model, the mounting frame 412 may be detachably arranged on the cover body 42, that is, the float assembly 41 can be quickly and conveniently mounted on the filtering apparatus 40 through the mounting frame 412, so that the float assembly 41 is configured as a standardized module in a corresponding product or scene, thereby expanding the application range of the float assembly 41d. In addition, by arranging the mounting frame 412, it is convenient for the user to detach the float assembly 41 from the cover body 42 of the filtering apparatus 40 for maintenance and washing, which greatly improves the use experience of the user.

In other embodiments of the present utility model, the mounting frame 412 is formed on the cover body 42, that is, the mounting frame 412 and the cover body 42 are of an integrated structure. Such an arrangement facilitates production, simplifies the assembly operation of the mounting frame 412 and the cover body 42, is beneficial for improving the production efficiency and reducing the cost, and improves the reliability of the connection between the mounting frame 412 and the cover body 42.

In the above embodiment, the mounting frame 412 may be arranged in the mounting space. For example, the mounting frame 412 may be detachably arranged on or formed on the fence 48, and the mounting frame 412 may also be detachably arranged on or formed on part of the outer edge of the cover body 42. It can be understood that the float assembly 41 and the cover body 42 may also be of an integrated structure, which is beneficial for further improving the production efficiency and reducing the manufacturing cost. For example, the cover body 42 and the float assembly 41 are integrally formed, and the magnetic member is arranged outside the float assembly 41. Alternatively, the cover body 42 and the float assembly 41 are both injection molded members, and in an injection molding process, the magnetic member is arranged inside the float assembly 41 and integrally formed with the cover body 42, which further simplifies the assembly process.

In some possible embodiments according to the present utility model, as shown in FIGs. 8 and 12, the filtering apparatus 40 is provided with a foolproof limiting member 425 and an indicating member 424. The foolproof limiting member 425 is suitable for abutting against the base station 20, and the indicating member 424 is used for indicating whether the filtering apparatus 40 is mounted in place.

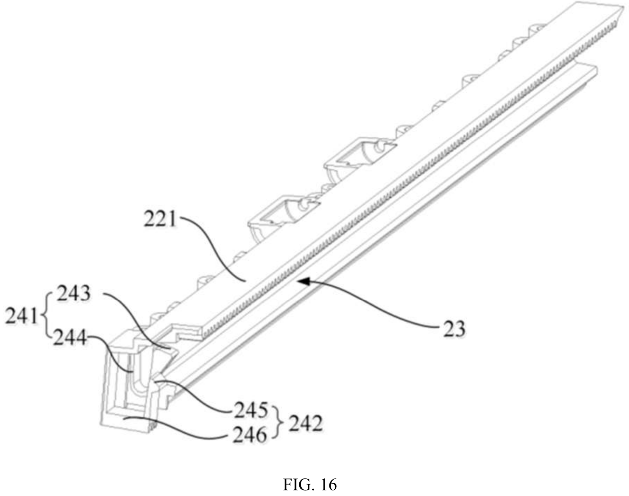

Further, as shown in FIGs. 15 and 16, the tank bottom of the cleaning tank 22 is provided with a mounting tank, and the cover body 42 is suitable for being located in the mounting tank, that is, the accommodating cavity is located in the mounting tank. The cleaning tank 22 is internally provided with a first foolproof positioning member 241 and a second foolproof positioning member 242 from top to bottom, that is, the first foolproof positioning member 241 is located above the second foolproof positioning member 242. As shown in FIGs. 8 and 12, the filtering apparatus 40 is provided with the foolproof limiting member 425 and the indicating member 424. When the foolproof limiting member 425 matches the second foolproof positioning member 242, the indicating member 424 indicates that the filtering apparatus 40 is mounted in place, and when the foolproof limiting member 425 matches the first foolproof positioning member 241, the indicating member 424 indicates that the filtering apparatus 40 is not mounted in place.

The arrangement of the indicating member 424 achieves an effective prompt effect, so that when the indicating member 424 indicates that the filtering apparatus 40 is not mounted in place, the user can adjust a mounting position of the filtering apparatus 40 relative to the mounting tank of the cleaning tank 22 punctually, so as to determine whether the filtering apparatus 40 is accurately mounted at the appropriate position of the cleaning tank 22 according to the indication of the indicating member 424. That is, through the cooperation of the two foolproof positioning members, the foolproof limiting member 425 and the indicating member 424, whether the filtering apparatus 40 is correctly and accurately mounted at the appropriate position of the cleaning tank 22 can be quickly and accurately determined, so as to remind the user of making corresponding operations. This achieves a simple structure and high convenience in use.

That is to say, in the base station 20 according to the present utility model, the base station main body 21 is provided with the two foolproof positioning members, i.e., first foolproof positioning member 241 and the second foolproof positioning member 242, and the filtering apparatus 40 is provided with the foolproof limiting member 425 and the indicating member 424, so that the filtering apparatus 40 can filter the liquid discharged from the cleaning tank 22, and the liquid level in the cleaning tank 22 and whether the filtering apparatus 40 is mounted in place relative to the cleaning tank 22 are detected; and meanwhile, whether the filtering apparatus 40 is accurately mounted in place relative to the cleaning tank 22 can be prompted. This expands functions of the filtering apparatus 40, achieves function diversification of the filtering apparatus 40, and can meet the design requirements of the base station 20 for the compact structure.

Further, the base station main body 21 may be provided with foolproof positioning members besides the first foolproof positioning member 241 and the second foolproof positioning member 242. That is, the number of the foolproof positioning members may be at least three, for example, the number of the foolproof positioning members is three or four or other values that meet the requirements, and different numbers of foolproof positioning members can meet the requirements of different mounting positions of the filtering apparatus 40 relative to the cleaning tank 22 and different structures of the filtering apparatus 40. It can be understood that in some embodiments, the number of the foolproof positioning member may also be one, that is, when the foolproof positioning member matches the foolproof limiting member 425, the indicating member 424 indicates that the filtering apparatus 40 is mounted in place, otherwise, the indicating member 424 indicates that the filtering apparatus 40 is not mounted in place, and such an arrangement is beneficial for further simplifying the structure.

In the above embodiment, as shown in FIG. 16, the first foolproof positioning member 241 and the second foolproof positioning member 242 are arranged above the mounting tank, for example, the first foolproof positioning member 241 and the second foolproof positioning member 242 are arranged on the inner side wall of the cleaning tank 22, and the first foolproof positioning member 241 is located above the second foolproof positioning member 242. The indicating member 424 may include a planar structure located above the foolproof limiting member 425, for example, the indicating member 424 is a top surface of the filtering apparatus. When the user mounts the filtering apparatus 40, if the filtering apparatus 40 is only placed in the mounting tank without exerting a downward pressure on the filtering apparatus 40, the foolproof limiting member 425 will be abutted against the first foolproof positioning member 241. In this case, the indicating member 424, that is the planar structure above the foolproof limiting member 425, is higher than a tank top 221 of the cleaning tank 22, indicating that the filtering apparatus 40 is not mounted in place, that is, the side wall of the filtering apparatus 40 close to the inside of the cleaning tank 22 will protrude from the tank bottom of the cleaning tank 22. In this case, the liquid at the tank bottom of the cleaning tank 22 outside the mounting tank cannot smoothly flow through the filtering apparatus 40 due to obstruction by the side wall, for example, the liquid cannot flow into the accommodating cavity through the cover body 42. Therefore, it is necessary to remount the filtering apparatus 40. Since the indicating member 424 obviously protrudes from the cleaning tank 22, the user can be reminded that the filtering apparatus 40 is not mounted in place. After receiving the indication, the user can exert the downward pressure on the filtering apparatus 40, so as to urge the foolproof limiting member 425 to run downward and match the second foolproof positioning member 242, that is, the foolproof limiting member 425 is located on the lower surface of the second foolproof positioning member 242. In this case, the indicating member 424, that is the planar structure of the foolproof limiting member 425, is located in the cleaning tank 22, that is, the planar structure is located below or flush with the tank top 221 of the cleaning tank 22, indicating that the filtering apparatus 40 is mounted in place. In this case, the liquid at the tank bottom of the cleaning tank 22 outside the mounting tank can smoothly flow through the filtering apparatus 40 to be filtered, that is, the liquid can smoothly flow into the accommodating cavity through the cover body 42.

The indicating member 424 is a planar structure located above the foolproof limiting member 425, it is convenient to compare the flatness of the planar structure with that of other components, it is further convenient for the user to confirm whether the filtering apparatus 40 is mounted in place through the planar structure, and the planar structure is convenient to machine and easy to implement, and suitable for popularization and application. Further, the planar structure may be painted with a color or provided with an indicator light to further play a role of reminding and facilitating identification, for example, the planar structure is painted with the pigment of yellow, red or other brighter colors, so that the user can quickly and accurately find the position of the planar structure, and determine whether the planar structure protrudes from the tank top 221 of the cleaning tank 22, so as to determine whether the filtering apparatus 40 is mounted in place.

That is to say, in the base station 20 according to the present embodiment of the present utility model, whether the filtering apparatus 40 is accurately mounted in place relative to the cleaning tank can be determined by arranging the mounting tank at the tank bottom of the cleaning tank 22 and utilizing a positional relationship between the planar structure on the top of the filtering apparatus 40 and the tank top 221 of the cleaning tank 22, for example, whether the top surface of the filtering apparatus 40 protrudes from the cleaning tank 22. This avoids the situation that the filtering apparatus 40 is not mounted in place relative to the cleaning tank 22 and the non-contact sensing element senses the non-contact sensed elements, which improves the mounting accuracy of the filtering apparatus 40, achieves a simple structure, is easy to implement and has a better prompting effect and an accurate prompting result, thereby being convenient for the user to confirm whether the filtering apparatus 40 is mounted in place.

The arrangement of the first foolproof positioning member 241, the second foolproof positioning member 242 and the foolproof limiting member 425 can constrain the movement of the filtering apparatus 40 relative to the cleaning tank 22, such as constrain the movement of the filtering apparatus 40 relative to the cleaning tank 22 in the vertical upward direction, which is further beneficial for the prepositioning of the filtering apparatus 40 during mounting and the reliable connection between the filtering apparatus 40 and the base station main body 21, and achieves a simple structure and easy implementation.

In the present embodiment of the present utility model, the second foolproof positioning member 242 may also play a role in fixing the filtering apparatus 40 when the filtering apparatus 40 is correctly mounted in the mounting tank. In addition, the first foolproof positioning member 241 is located above the second foolproof positioning member 242, so that when the foolproof limiting member 425 is pushed up by the first foolproof positioning member 241, the user can be more obviously prompted that the filtering apparatus 40 is not correctly mounted in the cleaning tank 22, which is beneficial for improving the working reliability of the base station 20.

In the above embodiment, as shown in FIGs. 8 and 12, the filtering apparatus 40 includes a connecting part 426 connected with the cover body 42, the connecting part 426 is located on a side of the cover body 42 away from the filtering mesh bag 43, that is, the connecting part 426 is located outside the accommodating cavity and extends above the mounting tank, and the foolproof limiting member 425 is arranged on the connecting part 426. With such an arrangement, the problem of the influence on the filtering effect caused by the fact that a portion of the liquid cannot flow through the filtering apparatus 40 due to a larger gap between the filtering apparatus 40 and the mounting tank since the foolproof limiting member 425 is located in the mounting tank is avoided, that is, the matching of the foolproof limiting member 425 above the mounting tank with the second foolproof positioning member 242 is beneficial for improving the tightness of the connection between the filtering apparatus 40 and the mounting tank, which is further beneficial for ensuring a better filtering effect.

One end of the connecting part 426 is connected with the cover body 42, and an end of the connecting part 426 away from the cover body 42 is provided with a planar structure, that is, the planar structure is located at the top of the connecting part 426. In this way, the arrangement of the foolproof limiting member 425 and the indicating member 424 can be achieved through the connecting part 426, which achieves a simple structure and meets the design requirements of the base station for the small size and compact structure. Further, the connecting part 426 is connected with the cover body 42, for example, the connecting part 426 and the cover body 42 are integrally formed, which is beneficial for improving the reliability of the connection between the connecting part 426 and the cover body 42 and convenient for production, simplifies the assembly process and reduces the manufacturing cost.

In the above embodiment, the foolproof limiting member 425 includes a buckle structure. As shown in FIG. 16, both the first foolproof positioning member 241 and the second foolproof positioning member 242 are elastic members. The first foolproof positioning member 241 includes a first abutting part 243 suitable for abutting against the foolproof limiting member 425, and the second foolproof positioning member 242 includes a second abutting part 245 suitable for abutting against the foolproof limiting member 425. The first abutting part 243 is located above the second abutting part 245. With such an arrangement, the movement of the filtering apparatus 40 relative to the base station main body 21 can be limited by the abutting foolproof limiting member 425 against the first abutting part 243 and the second abutting part 245, and the prepositioning and detachable connection between the filtering apparatus 40 and the base station main body 21 can be achieved by using the elasticity of the first foolproof positioning member 241 and the second foolproof positioning member 242.

For example, during assembly of the filtering apparatus 40, when the buckle structure of the foolproof limiting member 425 is abutted against the first abutting part 243 of the first foolproof positioning member 241, the planar structure of the filtering apparatus 40 located above the connecting part 426 will be higher than the tank top 221 of the cleaning tank 22, indicating that the filtering apparatus 40 is not mounted in place. Since the foolproof positioning member 24 is an elastic member, the filtering apparatus 40 is continuously pressed downward by overcoming the elastic force exerted by the first foolproof positioning member 241 on the foolproof limiting member 425, so that the buckle structure of the foolproof limiting member 425 is abutted against the second abutting part 245 of the second foolproof positioning member 242, and the planar structure of the filtering apparatus 40 located above the connecting part 426 will be located in the cleaning tank 22, for example, the planar structure is flush with the tank top 221 of the cleaning tank 22, or the planar structure is lower than the tank top 221 of the cleaning tank 22, indicating that the cleaning apparatus 40 is mounted in place. By utilizing the elastic force exerted by the second foolproof positioning member 242 on the foolproof limiting member 425, the filtering apparatus 40 can be reliably and stably limited in the mounting tank, and then the reliable connection between the filtering apparatus and the base station main body 21 is achieved.

Further, as shown in FIGs. 8, 9 and 14, a protruding structure is arranged on an outer wall of at least one of the cover body 42 and the filtering mesh bag 43, that is, the protruding structure 44 is arranged on an outer wall of the filtering apparatus 40. Correspondingly, the inner side wall of the mounting tank is provided with a groove structure matching the protruding structure 44. The groove structure matches the protruding structure 44, so that the prepositioning of the filtering apparatus 40 during mounting into the mounting tank is achieved, which is beneficial for improving the assembly efficiency of the two. It can be understood that the protruding structure 44 may also be arranged on the outer wall of the filtering mesh bag 43.

Specifically, the protruding structure 44 may be arranged on the cover body 42, or the protruding structure 44 may be arranged on the filtering mesh bag 43, or the protruding structures 44 may be arranged on both the cover body 42 and the filtering mesh bag 43. The different arrangement positions of the protruding structure 44 can meet the requirements of the cover body 424 and the filtering mesh bag 43 for different structures, which expands the application range of the product. Specifically, as shown in FIG. 8, the protruding structure 44 is arranged on the cover body 42.

In the above embodiment, as shown in FIG. 16, the first foolproof positioning member 241 further includes a first supporting part 244 connecting the first abutting part 243 and the base station main body 21, which is beneficial for improving the reliability of the connection between the first abutting part 243 and the base station main body 21. The second foolproof positioning member 242 further includes a second supporting part 246 connecting the second abutting part 245 and the base station main body 21, which is beneficial for improving the reliability of the connection between the second abutting part 245 and the base station main body 21. It can be understood that the first supporting part 244 and the first abutting part 243 may be of an integrated structure or a split structure, and the second supporting part 246 and the second abutting part 245 may be of an integrated structure or a split structure, that is, the first foolproof positioning member 241 may be of an integrated structure or a split structure, and the second foolproof positioning member 242 may be of an integrated structure or a split structure. The integrated structure facilitates production, simplifies the assembly process and is beneficial for reducing the manufacturing cost, and the split structure is beneficial for reducing the maintenance and replacement costs. Further, the first foolproof positioning member 241 and the second foolproof positioning member 242 may be of an integrated structure with the base station main body 21, which facilitates machining, simplifies the assembly process, and is beneficial for reducing the manufacturing cost.

The first supporting part 244 and/or the second supporting part 246 may be of an elastic bent structure, that is, the first abutting part 243 and/or the second abutting part 245 can move relative to the base station main body 21 by elastic deformation of the bent structure, so that the first abutting part 243 and/or the second abutting part 245 can be reliably and closely abutted against the buckle structure of the foolproof limiting member 425, or the buckle structure is smoothly disengaged from the first abutting part 243 and/or the second abutting part 245. This achieves a simple structure, easy implementation and the lower cost.

Specifically, the bent structure takes at least one of the following shapes: an L-shape, a Z-shape, a V-shape, an N-shape and an M-shape, and the different shapes of the bent structure can meet the requirements of the first abutting part 243 and/or the second abutting part 245 for different positions and different structures. The first abutting part 243 and/or the second abutting part 245 may be protrusions, slots or other structures that meet the requirements, which is not specifically limited by the present utility model.

Specifically, as shown in FIG. 16, the side wall of the mounting tank is provided with a track groove 3 for the washing assembly 30 to pass through, and the first foolproof positioning member 241 and the second foolproof positioning member 242 are arranged close to one end part of the track groove 23. In this way, the influence of the first foolproof positioning member 241 and the second foolproof positioning member 242 on a moving range of the washing assembly 30 can be reduced, which is beneficial for greatly increasing the moving range of the washing assembly 30 and improving the cleaning effect.

The present utility model has been explained by the above embodiments, but it should be understood that the above embodiments are only for the purpose of illustration and explanation, and are not intended to limit the present utility model to the scope of the described embodiments. In addition, it can be understood by those skilled in the art that the present utility model is not limited to the above embodiments, more variations and modifications can be made according to the teaching of the present utility model, and these variations and modifications all fall within the scope claimed by the present utility model. The protection scope of the present utility model is defined by the appended claims and the equivalent scope thereof.

## Claims

1. A filtering apparatus for a base station of a cleaning robot system, wherein the base station is provided with a cleaning tank for mounting of the filtering apparatus, and the filtering apparatus is **characterized by** comprising:
a cover body and a filtering mesh bag, wherein the cover body is arranged above the filtering mesh bag and defines an accommodating cavity with the filtering mesh bag, and the cover body and the filtering mesh bag are movably connected through a connecting structure to achieve opening and closing of the accommodating cavity;
wherein the cover body is provided with a plurality of first filtering holes, the first filtering holes are used for filtering part of impurities carried by a liquid flowing into the accommodating cavity through the cleaning tank, and the accommodating cavity is used for accommodating part of solid impurities carried by the liquid flowing through the accommodating cavity.

2. The filtering apparatus according to claim 1, **characterized in that**
the connecting structure comprises at least one of a pivoting mechanism, a snap-fit structure, a magnetic attraction structure and a screw connection structure.

3. The filtering apparatus according to claim 1, **characterized in that** the filtering mesh bag comprises:
a support frame and a mesh screen, wherein the support frame is connected with the cover body and provided with a water outlet area communicating with the inside and outside of the accommodating cavity, and the mesh screen is connected with the support frame and located at the water outlet area.

4. The filtering apparatus according to claim 3, **characterized in that**
the number of the water outlet area is at least one, and the mesh screens and the water outlet areas are in one-to-one correspondence.

5. The filtering apparatus according to claim 3, **characterized in that**
the support frame is a plastic member, and is connected with the mesh screen through secondary molding.

6. The filtering apparatus according to claim 3, **characterized in that**
the support frame is also provided with second filtering holes communicating with the inside and outside of the accommodating cavity, and the second filtering holes are located above the mesh screen.

7. The filtering apparatus according to claim 6, **characterized in that**
the support frame comprises a bottom plate and a side plate which are connected, the side plate is connected with the cover body, the water outlet area is arranged on the bottom plate, and the second filtering holes are located in the side plate and/or the bottom plate.

8. The filtering apparatus according to claim 1, **characterized by** further comprising:
a float assembly which is arranged on the cover body and comprises a float main body floating on a liquid surface under an action of the liquid, wherein
one of a non-contact sensing element and a non-contact sensed element is arranged on the float main body and the other thereof is arranged on the base station, and when the filtering apparatus is arranged in the cleaning tank and a liquid level in the cleaning tank falls within a specific range, the non-contact sensing element is capable of sensing the non-contact sensed element.

9. The filtering apparatus according to claim 8, **characterized in that**
the non-contact sensed element is arranged on the float main body; and
the non-contact sensing element is arranged on the base station.

10. The filtering apparatus according to claim 8, **characterized in that**
the non-contact sensed element comprises a magnetic member; and
the non-contact sensing element comprises a magnetic sensing element.

11. The filtering apparatus according to claim 8, **characterized in that**
the cover body comprises a cover main body and a fence, wherein the cover main body is connected with the filtering mesh bag, the first filtering holes are formed in the cover body, the fence and a portion of an outer edge of the cover main body are connected and cooperatively form a mounting space outside the accommodating cavity, and the float main body is located in the mounting space in a horizontal direction.

12. The filtering apparatus according to claim 8, **characterized in that** the float assembly further comprises:
a mounting frame detachably arranged on the cover body or formed above the cover body; and
a connector, one end of the connector being rotatably connected with the mounting frame, and the other end of the connector being connected with the float main body.

13. The filtering apparatus according to claim 1, **characterized in that**
the filtering apparatus is provided with a foolproof limiting member and an indicating member, wherein the foolproof limiting member is suitable for abutting against the base station, and the indicating member is used for indicating whether the filtering apparatus is mounted in place.

14. The filtering apparatus according to claim 13, **characterized in that**
the foolproof limiting member comprises a buckle structure; and
the indicating member comprises a planar structure located above the foolproof limiting member.

15. The filtering apparatus according to claim 14, **characterized in that** the filtering apparatus further comprises:
a connecting part connected with the cover body and located on a side of the cover body away from the filtering mesh bag, wherein the foolproof limiting member is arranged on the connecting part, and the planar structure is arranged at an end of the connecting part away from a filtering mesh.

16. The filtering apparatus according to claim 1, **characterized in that**
a protruding structure is arranged on an outer wall of at least one of the cover body and the filtering mesh bag.

17. A base station for washing a cleaning robot, **characterized by** comprising:
a base station main body provided with a cleaning tank; and
the filtering apparatus according to any one of claims 1 to 16, the filtering apparatus being detachably mounted in the cleaning tank.

18. The base station according to claim 17, **characterized in that**
a tank bottom of the cleaning tank is provided with a mounting tank, and a side wall of the mounting tank is provided with a groove structure matching the protruding structure of the filtering apparatus.

19. The base station according to claim 18, **characterized in that**
a first foolproof positioning member and a second foolproof positioning member which are located above the mounting tank and distributed from top to bottom are arranged in the cleaning tank; when the foolproof limiting member of the filtering apparatus matches the first foolproof positioning member, the planar structure of the filtering apparatus is higher than a tank top of the cleaning tank, indicating that the filtering apparatus is not mounted in place; and when the foolproof limiting member matches the second foolproof positioning member, the planar structure is located below or flush with the tank top, indicating that the filtering apparatus is mounted in place.

20. The base station according to claim 19, **characterized in that**
the first foolproof positioning member and the second foolproof positioning member are both elastic members, the first foolproof positioning member comprises a first abutting part and a first supporting part which are connected, the first abutting part is suitable for abutting against the foolproof limiting member, the first supporting part is connected with the base station main body; and the second foolproof positioning member comprises a second abutting part and a second supporting part which are connected, the second abutting part is suitable for abutting against the foolproof limiting member and located below the first abutting part, and the second supporting part is connected with the base station main body.

21. A cleaning robot system, **characterized by** comprising:
a cleaning robot; and
the base station according to any one of claims 17 to 20, the cleaning robot being suitable for docking at the base station.
